(19) Europäisches Patentamt / European Patent Office / Office européen des brevets

(11) **EP 4 321 835 B1**

(12) **EUROPEAN PATENT SPECIFICATION**

(45) Date of publication and mention
of the grant of the patent:
**12.11.2025  Bulletin 2025/46**

(51) International Patent Classification (IPC):
***G01B 11/00*** *(2006.01)*    ***B21C 37/08*** *(2006.01)*
***B21C 51/00*** *(2006.01)*

(21) Application number: **22804304.8**

(22) Date of filing: **03.03.2022**

(52) Cooperative Patent Classification (CPC):
**G01B 5/0037; B21C 37/0811; B21C 51/00;**
**B23K 9/0253; B23K 9/0956; B23K 9/1274;**
**B23K 26/0093; B23K 26/032; B23K 26/044;**
**B23K 26/262; G01B 11/24;** Y02P 10/25

(86) International application number:
**PCT/JP2022/009165**

(87) International publication number:
**WO 2022/244383 (24.11.2022 Gazette 2022/47)**

(54) **APPARATUS FOR DETECTING POSITIONS OF SEAM PORTION AND HEATED PORTION IN WELDED STEEL PIPE, EQUIPMENT FOR MANUFACTURING WELDED STEEL PIPE, METHOD FOR DETECTING POSITIONS OF SEAM PORTION AND HEATED PORTION IN WELDED STEEL PIPE, METHOD FOR MANUFACTURING WELDED STEEL PIPE, AND METHOD FOR MANAGING QUALITY OF WELDED STEEL PIPE**

VORRICHTUNG ZUR ERFASSUNG DER POSITIONEN VON NAHTTEIL UND ERWÄRMTEM TEIL EINES GESCHWEISSTEN STAHLROHRS, ANLAGE ZUR HERSTELLUNG EINES GESCHWEISSTEN STAHLROHRS, VERFAHREN ZUR ERFASSUNG DER POSITIONEN VON NAHTTEIL UND ERWÄRMTEM TEIL EINES GESCHWEISSTEN STAHLROHRS, VERFAHREN ZUR HERSTELLUNG EINES GESCHWEISSTEN STAHLROHRS UND VERFAHREN ZUR QUALITÄTSKONTROLLE EINES GESCHWEISSTEN STAHLROHRS

APPAREIL DE DÉTECTION DE POSITION DE PARTIE SOUDÉE ET DE PARTIE CHAUFFÉE DANS UN TUYAU EN ACIER SOUDÉ, ÉQUIPEMENT DE FABRICATION DE TUYAU EN ACIER SOUDÉ, PROCÉDÉ DE DÉTECTION DE POSITION DE PARTIE SOUDÉE ET DE PARTIE CHAUFFÉE DANS UN TUYAU EN ACIER SOUDÉ, PROCÉDÉ DE FABRICATION DE TUYAU EN ACIER SOUDÉ ET PROCÉDÉ DE GESTION DE QUALITÉ DE TUYAU EN ACIER SOUDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2021  JP 2021083047**

(43) Date of publication of application:
**14.02.2024  Bulletin 2024/07**

(73) Proprietor: **JFE Steel Corporation**
**Tokyo 100-0011 (JP)**

(72) Inventors:
• **ONO, Hiroaki**
  **Tokyo 100-0011 (JP)**
• **IGIMI, Shinji**
  **Tokyo 100-0011 (JP)**
• **NAGAMATSU, Mitsuaki**
  **Tokyo 100-0011 (JP)**

(74) Representative: **Hoffmann Eitle**
**Patent- und Rechtsanwälte PartmbB**
**Arabellastraße 30**
**81925 München (DE)**

**(Cont. next page)**

**EP 4 321 835 B1**

(56) References cited:
JP-A- 2006 234 781 JP-A- 2006 234 781
JP-A- 2018 030 173 JP-A- H0 296 602
JP-A- H0 296 602 JP-A- H1 096 604
JP-A- H1 096 604 JP-A- S61 107 102

**Description**

Field

The present invention relates to a position detection device for a seam portion and a heated portion of a welded steel pipe, a manufacturing facility for a welded steel pipe, a position detection method for a seam portion and a heated portion of a welded steel pipe, a manufacturing method for a welded steel pipe, and a quality control method for a welded steel pipe.

Background

In a manufacturing line of a welded steel pipe (e.g., electroseamed pipe) in a steel process, a sheet-like steel plate is pressed, and both ends of the steel plate are butted and welded at an upper part to produce a welded steel pipe. At this time, the steel plate as a base material has material characteristics that satisfy required specifications because a temperature history and the like is controlled to achieve a required material quality in a manufacturing process. On the other hand, in a welded portion, since the base material is heated to a temperature at which iron melts, coarsened crystal grains deteriorate the material characteristics.

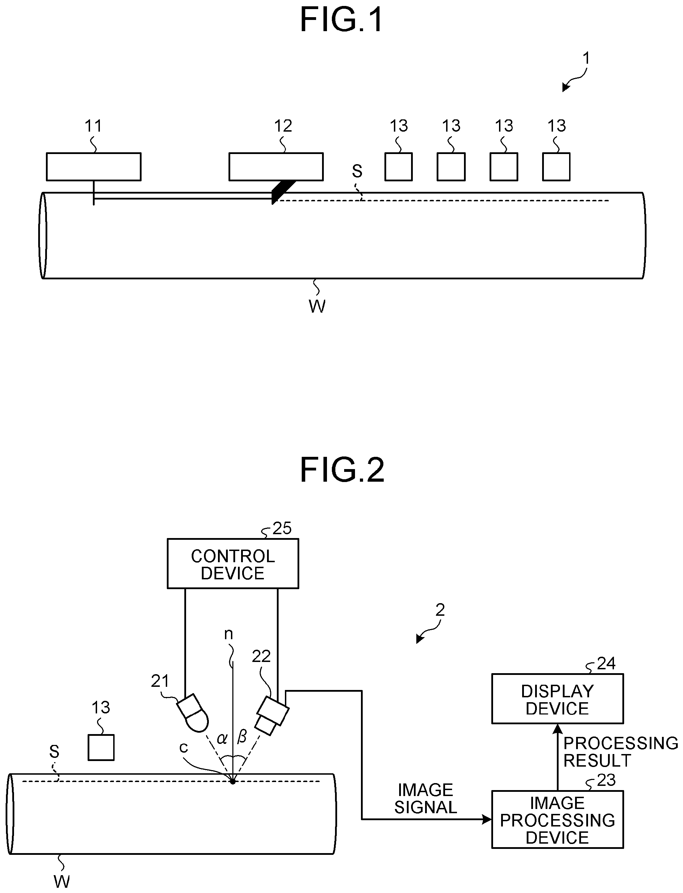

Therefore, for example, as illustrated in FIG. 1, the steel plate as the base material is connected in parallel and welded by a welding machine 11, and then a portion with defective shape (hereinafter referred to as a "bead portion") formed on a surface is cut by a cutting machine 12. Then, annealing is performed to reheat the welded portion after cutting to improve the material characteristics of a seam portion.

Annealing is often performed over a plurality of times by induction heating. It is important to accurately align a heating device (annealing heater) with the seam portion to heat only the seam portion without affecting the base material. However, due to pass line variation or twisting of the welded steel pipe, an operator visually observes a running state of the welded steel pipe and deviation of the seam portion and a heated portion from time to time to manually align the seam portion and the heated portion as required.

Here, in the present specification, the seam portion refers to a portion where a base plate is joined by welding. In other words, the seam portion is the welded portion. In a heating step (annealing step), it is ideal to heat in a way such that a center of a heating area is the seam portion. On the other hand, it is difficult to identify the seam portion by appearance. Therefore, a cut portion where a gloss is usually higher than a surrounding base material by cutting the bead portion is regarded as the seam portion. Then, an operator (worker) visually checks whether or not a position of the seam portion and a position of the heated portion, i.e., a position of the annealing heater, are aligned in the operation.

However, in this case, problems arise, such as loss of gloss due to adhesion of an oxide film to the seam portion by heating, a difficulty of visual recognition because the seam portion serves as the heated portion and emits red heat light, and a severity for the operator to constantly gaze at a surface emitting the red heat light. In addition, in order to accurately monitor the seam portion, it is necessary to approach an operation line during conveyance or temporarily stop the operation line. However, the former has a safety concern, and the latter causes decreased efficiency.

In order to solve these problems, various methods of detecting the position of the seam portion of the welded steel pipe have been proposed, including an electromagnetic method, a marking method, an image method, and an optical method. First, the electromagnetic method is a method of directly detecting the position of the seam portion. In the electromagnetic method, for example, as disclosed in Patent Literature 1, a difference in materials of the seam portion and a material portion is detected by an eddy flow sensor, a leakage magnetic flux sensor, or the like. In addition, many methods for detecting the cut portion as a seam have also been proposed.

In the marking method, for example, as disclosed in Patent Literature 2, marking with paint or the like is applied to a circumferential pipe surface having a known geometric relationship with the position of the seam portion, such as a side surface of the welded steel pipe, at a line position where the position of the seam portion is already known immediately after welding the welded steel pipe. Then, in a place where it is desired to identify the position of the seam portion in a downstream step, the position of the seam portion at the line position is detected by reading the circumferential position of a marker by using, for example, an industrial television (ITV) or a light receiving element.

In the image method, for example, as disclosed in Patent Literature 3, a difference in gloss between the seam portion and the material portion is detected by an image detection unit such as a CCD camera. As the optical method, a method using a scattering phenomenon of laser light has been proposed. In this method, the position of the seam portion is detected using the fact that directionality of fine irregularities on an object surface appears as a difference in two-dimensional distribution of reflected light due to equiphase of a light source wavefront of the laser.

Patent Literature 4 proposes a method of distinguishing the seam portion and the material portion by utilizing a property that a substantially isotropic reflection pattern is generated in the material portion of the welded steel pipe, but a reflection pattern spreads in a transverse direction in the seam portion due to a cutting mark substantially parallel to a pipe axis direction remaining on the seam portion. In addition, in order to solve the problem of Patent Literature 4, Patent Literature 5 proposes a method of limiting a wavelength and an incident angle of laser light to accurately detect the seam position by laser scattering. In addition, Patent Literature 6 proposes a method of calculating a maximum signal width by repeating a threshold process in horizontal and vertical directions from a reflection pattern image and detecting the position of the seam portion (cut portion).

Citation List

Patent Literature

Patent Literature 1: JP S56-33542 A
Patent Literature 2: JP H5-240844 A
Patent Literature 3: JP H10-170228 A
Patent Literature 4: JP S52-25687 A
Patent Literature 5: JP S59-108903 A
Patent Literature 6: JP S62-42004 A
Patent literature 7: JP H02-96602, forming the basis for the preamble of claims 1, 3, 6 and 7, discloses a method for detecting the position of a weld and resolves the problem of having a same detection device able to detect the weld from low temperature to high temperature. To that end, this document suggests using a visible light source and an infrared light source, and switching to visible light when infrared radiation decreases and the waveform of one peak becomes insufficient, and conversely, switching to infrared light when the waveform of two peaks of visible light becomes insufficient.

Summary

Technical Problem

A method proposed in Patent Literature 1 senses a phenomenon in which a difference in magnetic permeability or electrical conductivity, due to a difference in structure such as a crystal grain size, appears as a difference in magnetic flux distribution. Therefore, there is a problem that it is likely to be affected by streaky non-uniformity of a surface shape, such as scratches on a tube surface. It is also difficult to detect a position of a seam portion when a material is made uniform by annealing. Furthermore, since permeability and electrical conductivity greatly change by temperature, there is also a problem that a temperature distribution becomes a disturbance when the temperature distribution occurs in the circumferential direction of the pipe as in a welded steel pipe after annealing.

In the marking method proposed in Patent Literature 2, if there is a step of reheating the welded steel pipe such as annealing of the seam portion, marking paint may be peeled off, and reliability of detection may reduce. In addition, when there is a positional deviation between orientation of a marking device or a reading device such as an ITV and a tube central axis, there is a problem that the positional deviation directly leads to a detection error.

In addition, the methods proposed in Patent Literatures 4 to 6 are all optical methods attempting to calculate a relative position of the seam position with respect to a heating device using reflection by a laser, an image, and shape measurement. However, it is known that the welded steel pipe gently fluctuates by about several millimeters in a width direction with respect to the heating device. In this case, an amount of pass line variation at positions of the detection device and the annealing heater is not always the same, and even when the positional relationship of the seam portion is accurately calculated with respect to the detection device, there is a problem that the heated position deviates from the seam portion.

Furthermore, the conventionally proposed methods also have a problem in position detection accuracy of the seam portion. For example, in the image method proposed in Patent Literature 3, there is a problem that it is difficult to detect the seam portion due to addition of a disturbance caused by red heat of an object that becomes high temperature after annealing.

In addition, the reflection pattern of the laser light in the vicinity of the seam portion of the welded steel pipe is easily affected by an oxide film present on a surface depending on an incident angle. However, in the method proposed in Patent Literature 4, a suitable range regarding the wavelength of the laser light, incident light, and reflected light is not defined. In addition, the method proposed in Patent Literature 4 attempts to distinguish the cut portion and the base material portion based on whether or not reflected light is detected by a pair of light receiving elements arranged at both ends in the width direction of a light receiving surface. However, depending on the oxide film, a scratch, or the like that may occur around the seam portion of the actual welded steel pipe, even when a scattering pattern occurs, there is a problem that a light receiving intensity becomes weak and the position of the seam portion cannot be appropriately detected.

In addition, in the method proposed in Patent Literature 5, the wavelength and the incident angle of the laser light are limited, but a specific calculation method for a feature amount of the reflection pattern image, in order to specify the seam portion, is not clarified. Therefore, there is a problem that the seam portion cannot be automatically detected as it is.

In addition, in the method proposed in Patent Literature 6, there are many parameters to be set, before obtaining the maximum signal width, in a process of image processing including an experimental formula for selecting a proper scanning line and a parameter in a threshold process for obtaining the maximum amplitude. However, these parameters vary depending on a material, steel pipe standards, and the like, and thus the operation is complicated. In addition, there is a problem that a long-term accuracy test is required to acquire appropriate setting parameters. On the other hand, there is a problem that appropriate detection cannot be performed when the scattering pattern has directionality in an oblique direction of the image.

In addition, since all methods proposed in Patent Literatures 4 to 6 use the reflection pattern of laser light, large-scale equipment is required, leading to a problem in terms of cost and maintenance.

The present invention has been made in view of the above, and it is therefore an object of the present invention to provide a position detection device for a seam portion and the heated portion of a welded steel pipe capable of accurately detecting positions of the seam portion and the heated portion of the welded steel pipe in a manufacturing process of the welded steel pipe, a manufacturing facility for the welded steel pipe, a position detection method for the seam portion and the heated portion of the welded steel pipe, a manufacturing method for the welded steel pipe, and a quality control method for the welded steel pipe.

Solution to Problem

The above-described problem are resolved by the invention as set forth in the independent claims. Further embodiments are defined in the dependent claims.

Advantageous Effects of Invention

The present invention uses a first image obtained by imaging reflected light of light irradiated from an irradiation unit to a seam portion and a second image captured without irradiation of light. As a result, a low-cost and simple configuration can be achieved, and positions of the seam portion and a heated portion can be accurately detected.

Brief Description of Drawings

FIG. 1 is a diagram illustrating a schematic configuration of a manufacturing facility for a welded steel pipe.

FIG. 2 is a diagram illustrating a configuration of a position detection device for a seam portion and a heated portion of a welded steel pipe according to an embodiment of the present invention.

FIG. 3 is a timing chart illustrating exposure and light irradiation timings when a first image and a second image are captured by the position detection device for the seam portion and the heated portion of the welded steel pipe according to the embodiment of the present invention.

FIG. 4 is a diagram illustrating an example of arrangement of a plurality of irradiation units in the position detection device for the seam portion and the heated portion of the welded steel pipe according to the embodiment of the present invention.

FIG. 5 is a timing chart illustrating the exposure and light irradiation timings when the first image, the second image, and a third image are captured by the position detection device for the seam portion and the heated portion of the welded steel pipe according to the embodiment of the present invention.

FIG. 6 is a diagram illustrating an example of arrangement of a plurality of irradiation units in the position detection device for the seam portion and the heated portion of the welded steel pipe according to the embodiment of the present invention.

FIG. 7 is a diagram illustrating an example of a result of imaging the seam portion before and after annealing under a regular reflection condition and a diffuse reflection condition.

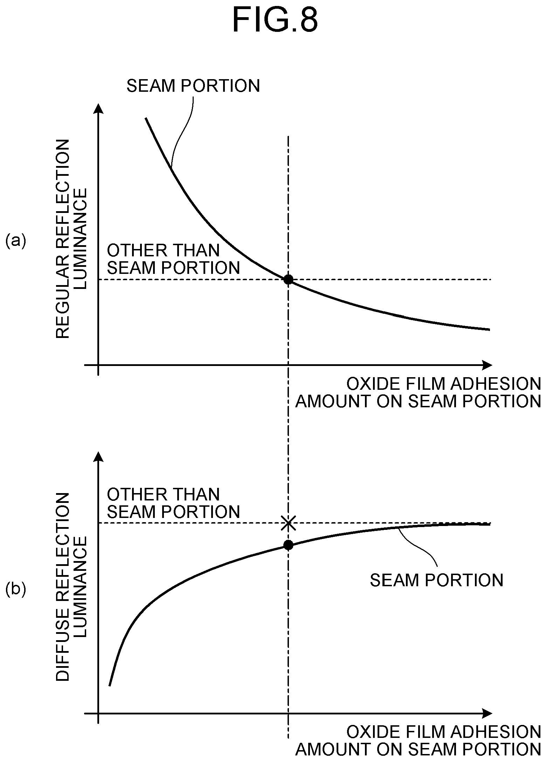

(a) of FIG. 8 is a diagram illustrating a relationship between an adhesion amount of an oxide film on the seam portion and a portion other than the seam portion and regular reflection luminance, and (b) of FIG. 8 is a diagram illustrating a relationship between an adhesion amount of an oxide film on a seam portion and a portion other than the seam portion and diffuse reflection luminance.

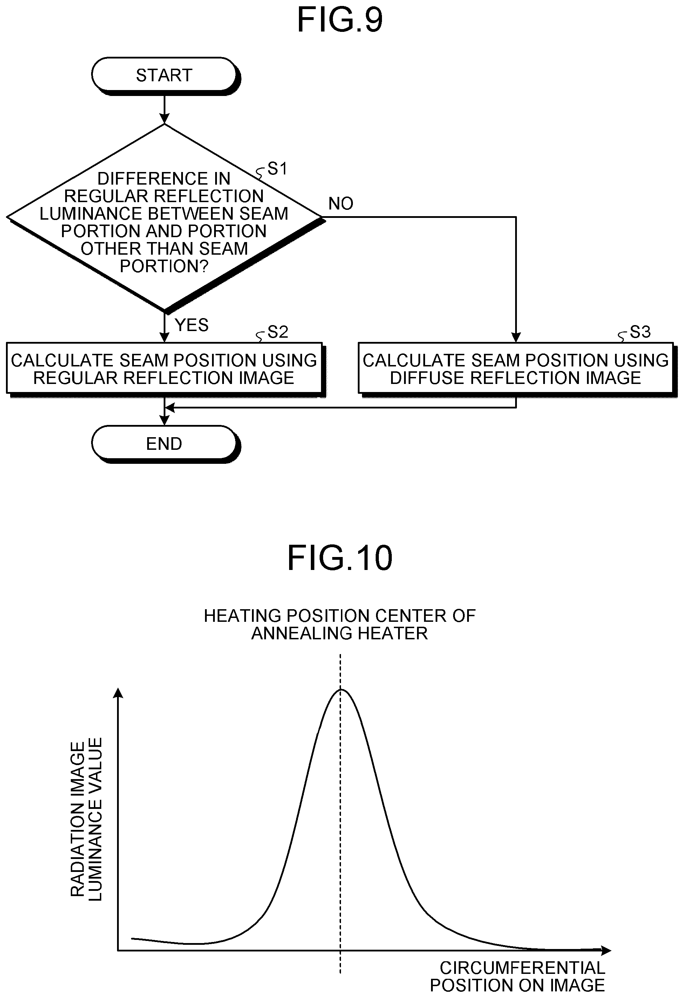

FIG. 9 is a diagram illustrating an example of a flowchart for detecting a position of a seam portion S by combining regular reflection information and diffuse reflection information.

FIG. 10 is a diagram illustrating an example of a luminance profile of a radiation image (difference image) of the first image and the second image.

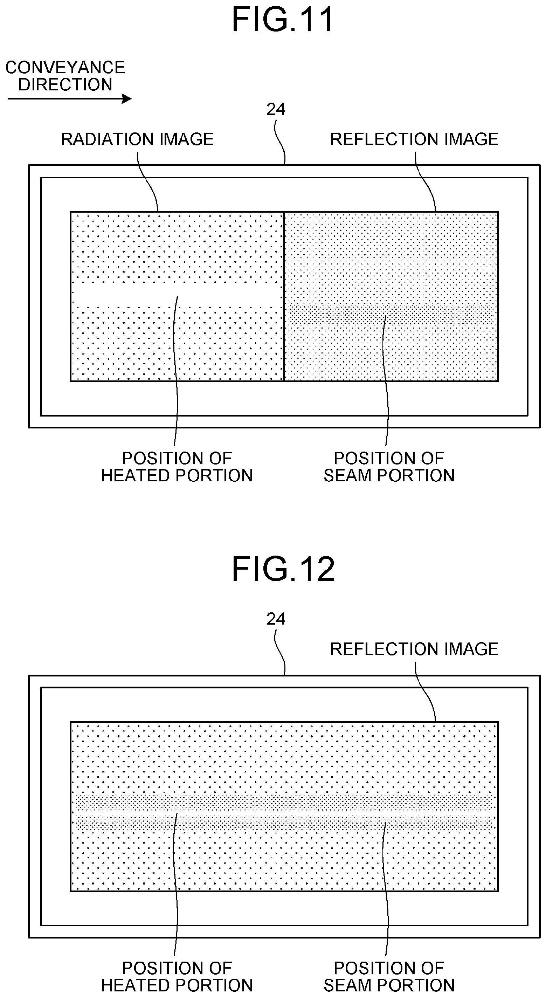

FIG. 11 is a diagram illustrating an example of a method for displaying a detection result by the position detection device for the seam portion and the heated portion of the welded steel pipe according to the embodiment of the present invention.

FIG. 12 is a diagram illustrating an example of a method for displaying the detection result by the position detection device for the seam portion and the heated portion of the welded steel pipe according to the embodiment of the present invention.

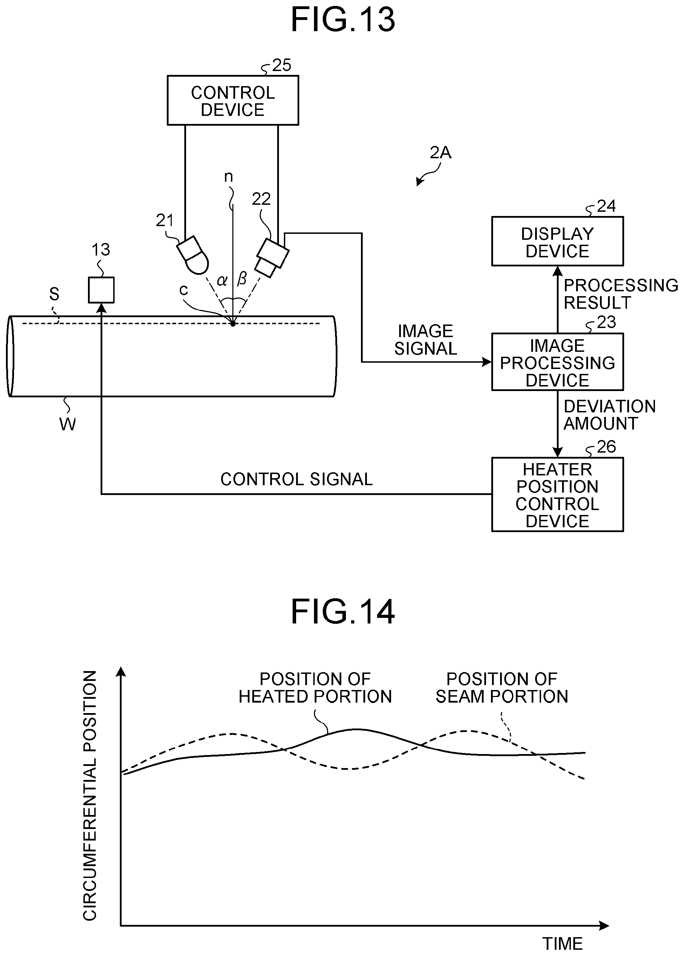

FIG. 13 is a diagram illustrating a configuration of a modified example of the position detection device for the seam portion and the heated portion of the welded steel pipe according to the embodiment of the present invention.

FIG. 14 is an example of the position detection device for the seam portion and the heated portion of the welded steel pipe according to the embodiment of the present invention, and is a graph illustrating positions of the seam portion and the heated portion detected by the position detection device.

Description of Embodiments

A position detection device for a seam portion and a heated portion of a welded steel pipe, a manufacturing facility for a welded steel pipe, a position detection method for a seam portion and a heated portion of a welded steel pipe, a manufacturing method for a welded steel pipe, and a quality control method for a welded steel pipe according to an embodiment of the present invention will be described with reference to the drawings.

[Manufacturing facility and manufacturing method for welded steel pipe]

First, a configuration of the manufacturing facility for a welded steel pipe will be described with reference to FIG. 1. The manufacturing method for a welded steel pipe will also be described. A manufacturing facility 1 includes a welding machine 11, a cutting machine 12, and a heating device including a plurality of annealing heaters 13.

The welding machine 11 welds a butted portion of a steel plate formed into a cylindrical shape (welding step). The cutting machine 12 cuts a bead portion of a welded steel pipe W formed after welding by the welding machine 11 (cutting step). The plurality of annealing heaters 13 heats a seam portion S after cutting by the cutting machine 12 (heating step).

FIG. 1 illustrates an example of installing the plurality of annealing heaters 13. However, it is also possible to install only one annealing heater 13. Here, in the present specification, a high-temperature area generated, during or after the heating step, as a result of heating the seam portion S is referred to as a heated portion. Since the heated portion has a high temperature, the heated portion emits red hot light or infrared light.

Normally, when the annealing heaters 13 are arranged at positions matching the seam portion S, the seam portion S and the heated portion coincide with each other. However, when the positions of one or more of the annealing heaters 13 are deviated, the heating is applied to a position deviated from the seam portion S for a deviation amount. In other words, not only the seam portion S but also the vicinity of the seam portion S will be heated together. In addition, when the deviation amount of the annealing heaters 13 is large, heating is applied only to the vicinity of the seam portion S, completely out of the seam portion S. Therefore, it can be said that the heated portion is actually generated by heating the seam portion S and/or the vicinity of the seam portion S in the heating step.

[Position detection device and position detection method]

Next, the position detection device and the position detection method for the seam portion and the heated portion of the welded steel pipe according to the embodiment of the present invention will be described with reference to FIG. 2. A position detection device 2 detects a position of the seam portion S of the welded steel pipe W and a position of the heated portion generated during or after heating the seam portion by the annealing heaters 13 when the annealing heaters 13 aim to heat the seam portion S (position detection step). Here, the positions of the seam portion S and the heated portion are both on a surface of the welded steel pipe W. When the position detection device 2 is applied to the manufacturing facility 1 provided with the plurality of annealing heaters 13, the position detection device 2 may be installed behind any one of the annealing heaters 13.

Further, the position detection device 2 measures the position of the seam portion S and the position of the heated portion on the surface of the welded steel pipe W from outside of the welded steel pipe W. Since the position detection step is performed during or after heating by the annealing heaters 13, the position detection step is performed during the heating step. In other words, the position detection step is included in the heating step.

As illustrated in FIG. 2, the position detection device 2 includes an irradiation unit 21, an imaging device 22, an image processing device 23, a display device 24, and a control device 25.

The irradiation unit 21 emits light to the seam portion S and the heated portion of the welded steel pipe W. The irradiation unit 21 includes, for example, a flash light source capable of instantly irradiating light. Further, the irradiation unit 21 may be configured by a combination of a light source capable of constantly irradiating light and a shutter capable of blocking the light of the light source.

Light irradiation (in particular, irradiation timing, irradiation light amount, and the like) by the irradiation unit 21 is controlled by the control device 25 described later. When the irradiation unit 21 includes the flash light source alone, the control device 25 controls light irradiation by controlling the flash light source itself. Furthermore, when the irradiation unit 21 includes the light source and the shutter capable of constantly irradiating light, the control device 25 controls light irradiation by opening and closing the shutter.

In this manner, a first image and a second image can be acquired by controlling the irradiation unit 21 and the imaging device 22 by the control device 25. Here, under the control of the control device 25, the "first image" is an image capturing the seam portion S and the heated portion in a state irradiated with light from the irradiation unit 21. In addition, under the same control of the control device 25, the "second image" is an image capturing the seam portion S and the heated portion in a state not irradiated with light from the irradiation unit 21.

The imaging device 22 images the seam portion S and the heated portion of the welded steel pipe W. The imaging device 22 includes, for example, a camera capable of consecutive photographing. In addition, the imaging device 22 captures the first image of the seam portion S and the heated portion irradiated with light from the irradiation unit 21 and the second image of the seam portion S and the heated portion not irradiated with light from the irradiation unit 21.

The first image is an image in which a reflected light component obtained by reflecting light from the irradiation unit 21 by the seam portion S or the heated portion and a self-light emitting component emitted from the heated portion are added and received by an imaging element of the imaging device 22. The second image is an image in which only the self-light emitting component emitted from the heated portion is received by the imaging element of the imaging device 22. The second image is also referred to as a "radiation image".

Then, by taking a difference between the first image and the second image, it is possible to acquire a third image including only the reflected light component reflecting the light from the irradiation unit 21 by the seam portion S and the heated portion. The third image is also referred to as a "reflection image (difference image)".

Specifically, the third image can be calculated by subtracting a luminance value of each pixel of the second image from a luminance value of each pixel of the first image. For example, the luminance value of each pixel constituting the third image I_diff is set to "I_diff $(x, y)$" (the number of pixels is set to "$X \times Y$", an x coordinate is set to "$1 \leq x \leq X$", and a y coordinate is set to "$1 \leq y \leq Y$"). Further, the luminance value of each pixel constituting a first image Ia is set to "Ia $(x, y)$", and the luminance value of each pixel constituting a second image Ib is set to "Ib $(x, y)$". In this case, the third image can be calculated by Formula (1) below.

$$I\_diff(x, y) = Ia(x, y) - Ib(x, y) \qquad \cdots (1)$$

Here, an imaging region imaged by the imaging device 22 does not need to be exactly only the seam portion S and the heated portion, and may be a wider region as long as the seam portion S and the heated portion to be measured are included. However, when the region is too large, a region not used for actual measurement increases. This decreases resolution per pixel because the number of elements of the camera is limited. In addition, when the region is too small, the heated portion and the seam portion S to be measured are out of a visual field due to fluctuation of the heated portion and the seam portion S and a change in a steel pipe diameter. As a result, measurement becomes impossible. Therefore, it is preferable to make the imaging range as high-resolution as possible within a range that the heated portion and the seam portion S can be stably imaged.

Furthermore, imaging timing of the imaging device 22 is controlled by the control device 25 described later to control exposure timing of the imaging device 22. In other words, when the control device 25 instructs the imaging device 22 to be in an exposure-on state, the imaging device 22 can perform imaging. When the exposure-on state is changed to an exposure-off state, the imaging is completed and an image can be obtained. Conversely, when the imaging device 22 is instructed to remain in the exposure-off state, the imaging device 22 does not perform imaging.

As described above, by using a light projecting and receiving optical system that can visually confirm the seam portion S of the welded steel pipe W, it is possible to acquire the reflection image (i.e., third image) from the seam portion S and the heated portion in a state of being optically aligned with the radiation image (i.e., second image) of red heat due to heating. Note that, as can be understood from the above description, the "reflection image" of the seam portion S can also be referred to as an image in which the light of the irradiation unit 21 is reflected on the seam portion S. Similarly, the "radiation image" of red heat due to heating can also be referred to as an image by radiation light from the heated portion generated by aiming to heat the seam portion S.

In order to bring positions of the radiation image and the reflection image into an optically aligned state, it is preferable to acquire the radiation image and the reflection image by a coaxial optical system. Still more, the first image and the second image are desirably images obtained by imaging the welded steel pipe W at a same position. Since the first image and the second image are photographed at different timings, a positional deviation occurs in a conveyance direction with respect to the welded steel pipe W being conveyed. Therefore, it is preferable to bring timings to capture the first image and the second image as close as possible so that a positional deviation amount between the first image and the second image is equal to or less than a predetermined allowable positional deviation amount.

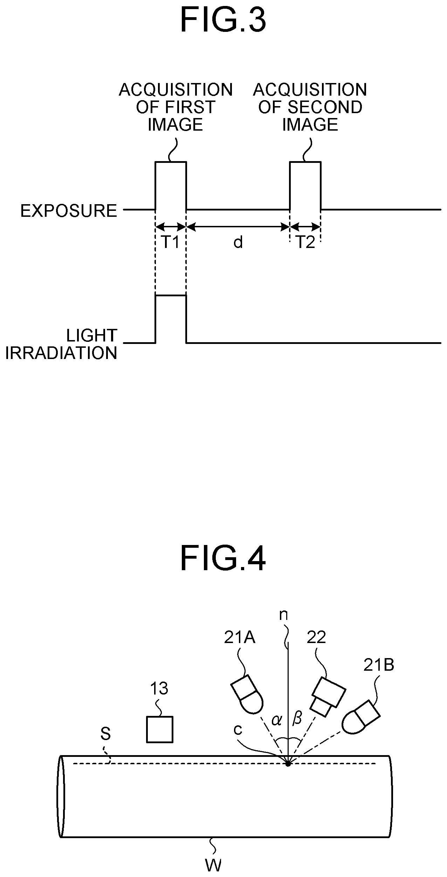

Specifically, it is preferable to perform imaging as illustrated in a timing chart of exposure of the imaging device 22 and light irradiation of the irradiation unit 21 in FIG. 3. In other words, it is preferable to instantaneously and continuously capture the first image and the second image by using the irradiation unit 21 capable of instantaneously emitting light such as a flash light source (or irradiation unit 21 capable of instantaneously emitting light by shutter opening and closing) and the imaging device 22 capable of performing two consecutive photographing. In FIG. 3, both exposure and light irradiation are turned on at high positions and off at low. In addition, the photographing order of the first image and the second image is not particularly limited. As illustrated in the drawing, the first image and the second image may be captured in this order, or the second image and the first image may be captured in this order.

Here, a timing difference d in capturing the first image and the second image can be expressed by, for example, Formula (2) below using the predetermined allowable positional deviation amount and a line conveyance speed.

$$\text{TIMING DIFFERENCE IN ACQUIRING TWO IMAGES d } (sec)$$

$$\leq \text{ALLOWABLE POSITIONAL DEVIATION AMOUNT } (mm) \quad \cdots (2)$$

$$/\text{LINE CONVEYANCE SPEED } (mm/sec)$$

Furthermore, at the time of photographing by the imaging device 22, it is preferable that saturation (overexposure) is not occur in the first image, and sensitivity is sufficient in the second image (radiation image) and the third image (reflection image) after calculating the difference. In this case, the irradiation light amount of the irradiation unit 21 is adjusted so that the reflected light component and a self-light emitting component by the irradiation unit 21 are substantially the same. This makes it possible to prevent saturation and insufficient sensitivity.

In addition, exposure time of the first image and the second image may be changed to control a balance between the reflected light component and the self-light emitting component. Specifically, when the exposure time of the first image is T1 and the exposure time of the second image is T2, it is desirable that T2 is sufficiently larger than T1 when an amount of the self-light emitting component is small. The third image in this case can be calculated by, for example, Formula (3) below.

$$I\_diff(x, y) = \{Ia(x, y) - Ib(x, y)\} \times T1 \div T2 \qquad \cdots (3)$$

The imaging device 22 may have a two-dimensional field of view, or may have a one-dimensional field of view. When the imaging device 22 has the one-dimensional field of view, it is necessary to have a field of view in a circumferential direction of the welded steel pipe W.

In addition, for example, when it is difficult to detect the seam portion S only from one type of reflection image using one irradiation unit 21 at detecting the seam portion S from the reflected light of the welded steel pipe W, two reflection images may be acquired by adding a second irradiation unit. In this case, for example, as illustrated in FIG. 4, an irradiation unit 21A and an irradiation unit 21B are disposed in a pipe axis direction of the welded steel pipe W. In addition, with respect to the seam portion S and the heated portion, the irradiation unit 21A can be arranged so as to satisfy a regular reflection condition, and the irradiation unit 21B can be arranged so as to satisfy a diffuse reflection condition.

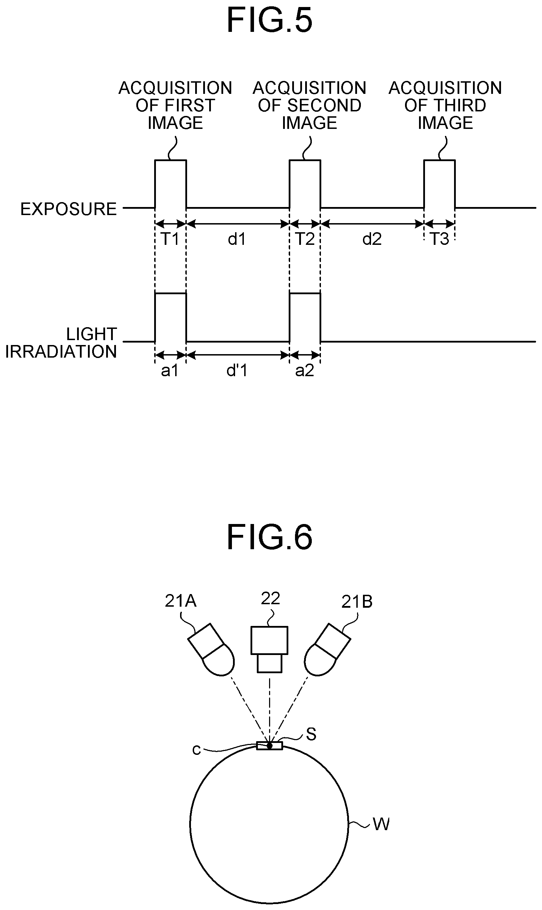

Then, imaging is performed as illustrated in a timing chart of exposure by the imaging device 22 and light irradiation by the irradiation units 21A and 21B in FIG. 5. In other words, the first image is captured by irradiating light only from the irradiation unit 21A (range indicated by a1 in FIG. 5), the second image is captured by irradiating light only from the irradiation unit 21B (range indicated by a2 in FIG. 5), and the third image (radiation image) is captured without irradiating light from the irradiation units 21A and 21B. Subsequently, a reflection image formed by a difference between the first image and the third image and a reflection image formed by a difference between the second image and the third image are calculated using a method similar to the above Formula (1) or (2).

In FIG. 3, both exposure and light irradiation are turned on at high positions and off at low. The photographing order of the first image, the second image, and the third image is not particularly limited. For example, as illustrated in the drawing, the first image, the second image, and the third image may be captured in this order, or in the order of the third image, the first image, and the second image, or in the order of the third image, the second image, and the first image. At this time, since the first image is used for taking a difference from both the second image and the third image, it is desirable that the timing to capture the first image has a small timing difference from both the images. Therefore, it is preferable that the first image is captured second in the order.

Here, a timing difference d1 in capturing the first image and the second image and a timing difference d2 in capturing the second image and the third image may be the same or different. At each of the timing differences d1 and d2, the reflection image formed by the difference between the first image and the third image and the reflection image formed by the difference between the second image and the third image may be calculated using the method similar to Formula (1) or (2). Similarly, exposure time T1 of the first image, exposure time T2 of the second image, and exposure time T3 of the third image may be the same or different. In addition, from the viewpoint of reducing the positional deviation as much as possible, the following is preferable. In other words, the timing difference d1 between capturing the first image and the second image and the timing difference d'1 between a timing of light irradiation only from the irradiation unit 21A and a timing of light irradiation only from the irradiation unit 21B are preferably the same as the timing difference d1 described above.

Although not under the regular reflection condition, as illustrated in FIG. 6, the irradiation unit 21A and the irradiation unit 21B may be arranged at positions symmetrical to each other with respect to the seam portion S in the circumferential direction of the welded steel pipe W, and light may be irradiated from two directions. In this way, even when the seam portion S has irregularities, the irradiation unit 21A and the irradiation unit 21B have different irradiation directions, so that directions of shadows become opposite, and the seam portion S can be accurately detected by image processing. Further, the positional relationship between the irradiation unit 21A and the irradiation unit 21B in FIGS. 4 and 6 may be exchanged. As described above, by using two sets of optical system, the detection accuracy of the seam portion S can be improved.

(Accuracy of camera)

Next, accuracy of the camera used as the imaging device 22 will be described. First, it is necessary to set resolution with respect to required alignment accuracy between the seam portion S and the heated portion of the welded steel pipe W. For example, when the accuracy of 0.5 mm is required, resolution of at least 0.5 mm/pixel or more is required because it is difficult to correctly estimate the position beyond the pixel resolution.

(Arrangement of irradiation unit and imaging device)

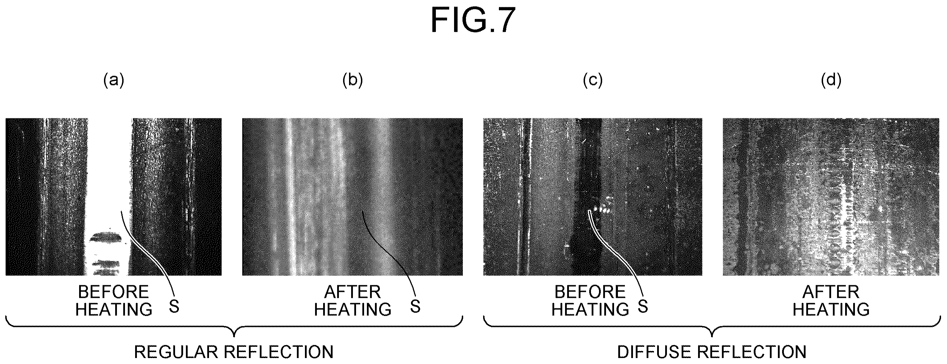

Next, appropriate arrangement positions of the irradiation unit 21 and the imaging device 22 for capturing an image of the seam portion S of the welded steel pipe W will be described. FIG. 7 illustrates images before and after annealing of the seam portion S. (a) is an image captured under the regular reflection condition before heating, (b) is an image captured under the regular reflection condition after heating, (c) is an image captured under the diffuse reflection condition before heating, and (d) is an image captured under the diffuse reflection condition after heating.

As described above, the seam portion S immediately after cutting the bead portion has very high mirror finishing property. When annealing is performed in this state, an oxide film (black skin oxide film) is generated on the surface. Then, as the seam portion S is heated, an adhesion amount of the oxide film increases, and a surface roughness increases according to the adhesion amount of the oxide film. As a result, the mirror finishing property of the seam portion S decreases and a diffusing property increases.

When imaging is performed under the regular reflection condition, the seam portion S appears brighter than other portions in a state of high mirror finishing property before heating, for example, as illustrated in (a) of FIG. 7. On the other hand, after heating, the mirror finishing property is decreased due to the adhesion of the oxide film, and the diffusing property is increased. Thus, for example, as illustrated in (b) of FIG. 7, the seam portion S appears darker than other portions according to the adhesion amount of the oxide film. In this way, when imaging is performed under the regular reflection condition, a difference in luminance is large before and after heating, and thus a significant difference also occurs in how the seam portion S is captured.

When imaging is performed under the diffuse reflection condition, the seam portion S appears darker than other portions in a state of high mirror finishing property before heating, for example, as illustrated in (c) of FIG. 7. On the other hand, after heating, for example, as illustrated in (d) of FIG. 7, it becomes difficult to distinguish the seam portion S from other portions. In this way, when imaging is performed under the diffuse reflection condition, there is also no significant difference in how the seam portion S is captured as compared with the case of imaging under the regular reflection condition.

A relationship between the adhesion amount of the oxide film and the regular reflection luminance on the seam portion S and other portions and a relationship between the adhesion amount of the oxide film and the diffuse reflection luminance on the seam portion S and other portions are summarized in (a) and (b) of FIG. 8.

The relationship between the adhesion amount of the oxide film and the regular reflection luminance is illustrated in (a) of FIG. 8. In (a) of FIG. 8, a solid line indicates a change in the regular reflection luminance on the seam portion S, a broken line indicates a change in the regular reflection luminance on portions other than the seam portion S, a horizontal axis indicates the adhesion amount of the oxide film on the seam portion S, and a vertical axis indicates the regular reflection luminance. On the other hand, (b) of FIG. 8 schematically illustrates the relationship between the adhesion amount of the oxide film and the diffuse reflection luminance. In (b) of FIG. 8, a solid line indicates a change in the diffuse reflection luminance on the seam portion S, a broken line indicates a change in the diffuse reflection luminance on portions other than the seam portion S, a horizontal axis indicates the adhesion amount of the oxide film on the seam portion S, and a vertical axis indicates the diffuse reflection luminance. Further, in (a) and (b) of FIG. 8, positions of the horizontal axes are roughly aligned with respect to the same adhesion amount so as to indicate the same adhesion amount at approximately the same position on the horizontal axis. In addition, a vertical dashed-dotted line indicates a certain time point at which the oxide film on the seam portion S becomes the same amount.

In the image under the regular reflection condition, when the oxide film is not much adhered to the seam portion S, that is, the left side with respect to the horizontal axis in (a) of FIG. 8, the seam portion S is brighter compared with other portions. Then, thereafter, as the adhesion amount of the oxide film increases, the luminance of the seam portion S decreases, and finally the seam portion S becomes darker than other portions. On the other hand, in the image under the diffuse reflection condition, when the oxide film is not much adhered to the seam portion S, that is, the left side with respect to the horizontal axis in (b) of FIG. 8, the seam portion S is darker compared with other portions. Then, thereafter, as the adhesion amount of the oxide film increases, the luminance of the seam portion S increases, and finally, the seam portion S becomes indistinguishable from other portions.

However, depending on a degree of the adhesion amount of the oxide film, the difference between the regular reflection luminance of the seam portion S and the regular reflection luminance of portions other than the seam portion S becomes small, and it may be difficult to detect the seam portion S based on the regular reflection luminance. This state is indicated by a dot (•) in (a) of FIG. 8. At this time, with respect to the adhesion amount of the oxide film same as that in (a) of FIG. 8 (illustrated by dashed-dotted line), the diffuse reflection luminance of the seam portion S is indicated by a dot (•) under the diffuse reflection condition in (b) of FIG. 8, and the diffuse reflection luminance of portions other than the seam portion S is indicated by a cross ($\times$). There is a high possibility that there is a large difference in the diffuse reflection luminance between the dot • and the cross $\times$. As described above, even when the difference between the luminance of the seam portion S and the luminance of the portions other than the seam portion S is small in the regular reflection luminance, the seam portion S can be detected based on the diffuse reflection luminance as long as the difference between the diffuse reflection luminance of the seam portion S and the diffuse reflection luminance of the portions other than the seam portion S is clearly generated under the diffuse reflection condition. In other words, the detection of the seam portion S becomes more reliable, which is more preferable, by combining regular reflection information and diffuse reflection information.

FIG. 9 illustrates an example of a flowchart for detecting a position of the seam portion S by combining the regular reflection information and the diffuse reflection information. First, under the regular reflection condition, the seam portion S and the portion other than the seam portion S are compared to determine whether there is a difference in the regular reflection luminance (Step S1). When there is a difference in the regular reflection luminance and the seam portion S can be detected (Yes in Step S1), the seam portion S is calculated such as by a threshold process using a luminance difference in regular reflection images (Step S2). On the other hand, when there is no difference in the regular reflection luminance and the seam portion S cannot be detected (No in Step S1), the seam portion S is calculated using the fact that the seam portion S looks bright or dark using the luminance value of diffuse reflection (Step S3). In this way, the seam portion S can be stably detected such as by the threshold process without depending on how the oxide film is adhered. Note that FIG. 9 is the example of the flowchart for stably detecting the seam portion S. However, regardless of the example, the seam portion S may be directly extracted from the regular reflection image and the diffuse reflection image by using four arithmetic operations, the threshold process, an AND process, an OR process, a combination of these processes, or the like.

Based on the above, it is preferable to arrange the irradiation unit 21 and the imaging device 22 so as to satisfy the regular reflection condition with respect to a measurement area c including the seam portion S. For example, as illustrated in FIG. 2, in the case of arrangement in the pipe axis direction, the following is preferable. In other words, it is preferable to install the irradiation unit 21 and the imaging device 22 at positions where an irradiation angle $\alpha$ of light by the irradiation unit 21 and a light receiving angle $\beta$ of light by the imaging device 22 are equal to each other with respect to a normal vector n of the measurement area c including the seam portion S of the welded steel pipe W. As a result, the seam portion S can be accurately detected before and after annealing. Note that it is obvious that the irradiation unit 21 and the imaging device 22 may be arranged other than the above arrangement as long as the seam portion S can be appropriately detected. Hereinafter, the description returns to the configuration of the position detection device 2.

The image processing device 23 processes the image captured by the imaging device 22 by a known image processing technique, and detects the position of the seam portion S and the position of the heated portion of the welded steel pipe W (positional relationship between the seam portion S and the heated portion). The image processing device 23 calculates the third image (reflection image) obtained from the difference between the first image and the second image (radiation image) by using, for example, Formula (1) or (2) above. Then, the third image calculated is processed by the known image processing technique to detect the positions of the seam portion S and the heated portion. Furthermore, the image processing device 23 may detect (calculate) a positional deviation amount of the heated portion with respect to the position of the seam portion S in addition to detection of the positions of the seam portion S and the heated portion. The "deviation amount" described above specifically indicates an amount deviated in the circumferential direction of the welded steel pipe W.

The radiation image (second image) captured by the imaging device 22 has high luminance at the position of the heated portion as illustrated in a luminance profile in FIG. 10. Therefore, the position of the heated portion can be detected by calculating the position at which the luminance becomes high. The position of the heated portion can be detected based on, for example, a position of the center of gravity in a width direction, a position of the highest luminance, a center position after binarization by the threshold process, a position of the center of gravity, and the like.

The regular reflection image (third image) of the welded steel pipe W obtained from the difference between the first image and the second image captured by the imaging device 22 looks bright when the adhesion amount of the oxide film on the surface is small (see (a) of FIG. 7). When the oxide film is sufficiently adhered, it looks dark (see (b) of FIG. 7). Therefore, a position of a portion to be bright and a position of a portion to be dark are calculated based on the same idea as the radiation image (second image).

When a vertical direction or a horizontal direction of the image does not exactly coincide with the conveyance direction of the welded steel pipe W, it is preferable to perform preprocessing such as image rotation. In addition, it is preferable to reduce noise by preprocessing such as removal of high frequency components by a frequency filter or the like, or integration, averaging, or median processing in the pipe axis direction of the welded steel pipe W.

In addition, when it is difficult to accurately calculate the seam portion S even by image processing by the image processing device 23 and the seam portion S can be determined by visually observing the image, the image of the heated portion and the image of the seam portion S may be visually displayed, for example, to an operator via the display device 24.

The display device 24 provides guidance to the operator by displaying a processing result by the image processing device 23. The display device 24 can display, for example, the positional deviation amount of the heated portion, as a numerical value, with respect to the position of the seam portion S of the welded steel pipe W detected by the image processing device 23. In addition, the display device 24 may display images of the position of the seam portion S and the position of the heated portion.

When the position of the seam portion S and the position of the heated portion are displayed as images, for example, the reflection image (third image) and the radiation image (second image) may be superimposed and displayed. Alternatively, as illustrated in FIG. 11, an image indicating the position of the seam portion S and an image indicating the position of the heated portion may be displayed side by side in the conveyance direction of the welded steel pipe W. Furthermore, for example, when the seam portion S cannot be automatically detected with high accuracy, the position of the heated portion estimated from the position of the annealing heater 13 may be superimposed and displayed on the seam portion S as illustrated in FIG. 12. As described above, by displaying the position of the seam portion S and the position of the heated portion as an image, the operator can intuitively grasp the position of the seam portion S and the position of the heated portion.

The control device 25 controls light irradiation (specifically, irradiation timing, irradiation light amount, etc.) by the irradiation unit 21 and the imaging timing of the imaging device 22. Specifically, the control device 25 controls the light irradiation by the irradiation unit 21 and the imaging timing of the imaging device 22 based on a predetermined allowable positional deviation amount of the first image and the second image.

Note that the position detection device 2 may include a notification unit that notifies by an alarm when there is a distance equal to or greater than a predetermined threshold between the position of the seam portion S and the position of the heated portion. In addition, the position detection device 2 may include a recording unit that accumulates images processed by the image processing device 23 and records transition of the heating state.

[Modified example]

In the position detection device 2 described above, position detection results of the seam portion S and the heated portion of the welded steel pipe W are displayed on the display device 24. Instead of this, for example, as illustrated in FIG. 13, the position of the annealing heater 13 may be controlled based on the positional deviation amount of the seam portion S and the heated portion detected by the image processing device 23. A position detection device 2A illustrated in FIG. 13 includes a heater position control device 26 in addition to the configuration of the position detection device 2 illustrated in FIG. 2.

The heater position control device 26 controls the position of the annealing heater 13 based on the positional deviation amount of the heated portion with respect to the position of the seam portion S detected by the image processing device 23 of the position detection device 2A. In other words, the heater position control device 26 moves the position of the annealing heater 13 in the circumferential direction of the welded steel pipe W so that the heated portion matches the seam portion S. As described above, by controlling the position of the annealing heater 13 based on the positional deviation amount of the heated portion with respect to the position of the seam portion S, the seam portion S can be accurately heated.

In addition, when there is a plurality of the annealing heaters 13, positions of the annealing heaters 13 before and/or after the position detection device 2A according to the present invention can be controlled. To control the position of the annealing heater 13 before the position detection device 2A, feedback control is performed, and the heating process can be stably controlled. On the other hand, to control the position of the annealing heater 13 before the position detection device 2A, feedforward control is performed, which is a control with better response, and the seam portion S heated at a deviated position will also be correctly heated after the position detection device 2A. More preferably, the positions of the annealing heaters 13 before and after the position detection device 2A are controlled, so that both feedback and feedforward advantages can be obtained. Most preferably, the positions of all the annealing heaters 13 before and after the position detection device 2A are controlled, so that an effect in the intended heating step can be obtained more reliably.

Note that, in the above description, an example of one imaging device 22 has been described, but the present invention is not limited thereto. As long as the same visual field range can be photographed and same optical conditions as the irradiation unit 21 can be achieved, two or more imaging devices 22 may be provided.

For example, the following modes are possible. A first imaging device 22A having characteristics suitable for capturing the first image and a second imaging device 22B having characteristics suitable for capturing the second image are prepared. The first imaging device 22A and the second imaging device 22B are arranged so that an object can be coaxially imaged using a prism, a half mirror, or a beam splitter. The control device 25 turns on exposure of the first imaging device 22A and turns off exposure of the second imaging device 22B at the time of light irradiation by the irradiation unit 21.

When the exposure time T1 of the first image ends and there is no light irradiation by the irradiation unit 21, the control device 25 turns off the exposure of the first imaging device 22A and turns on the exposure of the second imaging device 22B. Thereafter, when the exposure time T2 of the second image ends, the control device 25 turns off the exposure of the second imaging device 22B. At this time, it is preferable that the imaging locations of the first imaging device 22A and the second imaging device 22B coincide with each other for each pixel of each camera. In addition, even when the locations do not coincide with each other, it is preferable to align positions using a correspondence relationship when the positions corresponding to the pixels of the respective cameras are known.

In addition, when the welded steel pipe W is twisted in the heating process and the position of the seam portion S is different for each position of the annealing heaters 13, it is preferable to install a plurality of position detection devices 2A before and after each of the annealing heaters 13. With this arrangement, it is possible to grasp the positional relationship between the heated portion and the seam portion S for each of the annealing heaters 13, and position control performance is improved even when twisting occurs. Although it is preferable to install more position detection devices 2A, it is most preferable to grasp the positional relationship between the heated portion and the seam portion S before and after all the annealing heaters 13, so that an influence of twisting can be completely eliminated.

[Quality control method]

In a quality control method for the welded steel pipe W, a quality of the welded steel pipe W is controlled based on the positional deviation amount of the heated portion with respect to the position of the seam portion S detected by the position detection devices 2 or 2A. In the quality control method, for example, when the deviation amount is equal to or greater than the predetermined threshold, an inspection step is performed to inspect whether or not the quality (e.g., toughness) of the welded steel pipe W satisfies predetermined required specifications. Then, based on a result in the inspection step, it is determined whether the welded steel pipe W is reused as a lower grade product or discarded as a rejected product. As described above, by classifying the welded steel pipe W based on the positional deviation amount of the heated portion with respect to the position of the seam portion S, it is possible to provide the welded steel pipe W with excellent quality.

According to the position detection device for the seam portion and the heated portion of the welded steel pipe, the manufacturing facility for the welded steel pipe, the position detection method for the seam portion and the heated portion of the welded steel pipe, the manufacturing method for the welded steel pipe, and the quality control method for the welded steel pipe according to the embodiment described above, the following effects are obtained. In other words, by using the first image obtained by imaging the reflected light of the light irradiated from the irradiation unit 21 to the seam portion S and the second image captured without irradiation of light, a low-cost and simple configuration can be achieved, and the positions of the seam portion and the heated portion can also be accurately detected.

In addition, according to the position detection device for the seam portion and the heated portion of the welded steel pipe, the manufacturing facility for the welded steel pipe, the position detection method for the seam portion and the heated portion of the welded steel pipe, the manufacturing method for the welded steel pipe, and the quality control method for the welded steel pipe according to the embodiment, the following effects are also obtained. In other words, it is possible to visualize and automate measures for preventing positional deviation in the positional relationship between the seam portion S and the heated portion that has been conventionally dependent on visual observation of an actual pipe by an operator.

As described above, the position detection device for the seam portion and the heated portion of the welded steel pipe, the manufacturing facility for the welded steel pipe, the position detection method for the seam portion and the heated portion of the welded steel pipe, the manufacturing method for the welded steel pipe, and the quality control method for the welded steel pipe according to the present invention have been specifically described with reference to the embodiments and examples for carrying out the present invention.

[Example]

An example of the present invention will be described. In the example, a position detection device similar to that in FIG. 2 was constructed to detect the positions of the seam portion and the heated portion. As the imaging device, a 640 × 480 pixel camera was used, and a flash light source capable of performing irradiation at 50 $\mu$s was used as the irradiation unit. In addition, the imaging device and the irradiation unit were arranged under the regular reflection condition with the light irradiation angle of 5 degrees. FIG. 14 illustrates a result of calculating the positions of the seam portion and the heated portion by the gravity center process performed on the image obtained. As illustrated in FIG. 14, it can be seen that the heated portion accurately follows the seam portion.

Note that, in the example, imaging was performed under the regular reflection condition, but imaging may be performed under the diffuse reflection condition as long as a difference between the seam portion and a portion other than the seam portion can be detected as a feature of the image. Alternatively, the optical system illustrated in FIGS. 4 and 6 may be used for imaging.

Reference Signs List

1     MANUFACTURING FACILITY

11           WELDING MACHINE

12           CUTTING MACHINE

13           ANNEALING HEATER

2, 2A           POSITION DETECTION DEVICE

21, 21A, 21B     IRRADIATION UNIT

22           IMAGING DEVICE

23           INFORMATION PROCESSING DEVICE

24           DISPLAY DEVICE

25           CONTROL DEVICE

26           HEATER POSITION CONTROL DEVICE

S           SEAM PORTION

W           WELDED STEEL PIPE

n           NORMAL VECTOR

$\alpha$           IRRADIATION ANGLE

$\beta$           LIGHT RECEIVING ANGLE

c           MEASUREMENT AREA

**Claims**

1. A position detection device (2, 2A) for a seam portion (S) and a heated portion of a welded steel pipe (W), the position detection device (2, 2A) being configured to detect a position of the seam portion (S) of the welded steel pipe (W) and a position of the heated portion generated by heating the seam portion (S) and/or near the seam portion (S), the position detection device (2, 2A) comprising:

   an irradiation unit (21, 21A, 21B) configured to emit light;
   an imaging device (22) configured to capture a first image of the seam portion (S) and the heated portion irradiated with light and a second image of the seam portion (S) and the heated portion not irradiated with light; and
   a control device (25) configured to control light irradiation by the irradiation unit (21, 21A, 21B), the position detection device (2, 2A) being **characterized in that**:

   the control device (25) is configured to control an imaging timing of the imaging device (22), and
   the position detection device (2, 2A) further comprises an image processing device (23) configured to detect the position of the seam portion (S) and the position of the heated portion by taking a difference between the first image and the second image, thereby acquiring a third image including only the reflected light component reflecting the light from the irradiation unit (21, 21A, 21B) by the seam portion (S) and the heated portion.

2. The position detection device (2, 2A) for a seam portion (S) and a heated portion of a welded steel pipe (W) according to claim 1, wherein the control device (25) controls a light irradiation timing of the irradiation unit (21, 21A, 21B) and the imaging timing of the imaging device (22) based on an allowable positional deviation amount between the first image and the second image.

3. A position detection device (2, 2A) for a seam portion (S) and a heated portion of a welded steel pipe (W), the position detection device (2, 2A) being configured to detect a position of the seam portion (S) of the welded steel pipe (W) and a position of the heated portion generated by heating the seam portion (S) and/or near the seam portion (S), the position detection device (2, 2A) comprising:

   an irradiation unit (21, 21A, 21B) configured to emit light;
   an imaging device (22) configured to capture a first image of the seam portion (S) and the heated portion irradiated with light and a second image of the seam portion (S) and the heated portion not irradiated with light; and
   a control device (25) configured to control light irradiation by the irradiation unit (21, 21A, 21B), the position detection device (2, 2A) being **characterized in that**:

   the control device (25) is configured to control an imaging timing of the imaging device (22), and
   the control device controls a light irradiation timing of the irradiation unit and the imaging timing of the imaging device based on an allowable positional deviation amount between the first image and the second image.

4. The position detection device (2, 2A) for a seam portion (S) and a heated portion of a welded steel pipe (W) according to any one of claims 1 to 3, wherein the irradiation unit (21, 21A, 21B) and the imaging device (22) are arranged at positions that satisfy a regular reflection condition with respect to a measurement area including the seam portion (S).

5. A manufacturing facility (1) for a welded steel pipe (W), comprising:

   a welding machine (11) configured to weld a butted portion of a steel plate formed into a tubular shape;
   a cutting machine (12) configured to cut a bead portion after welding;
   one or a plurality of annealing heaters (13) configured to heat a seam portion (S) after cutting; and
   a position detection device (2, 2A) for a seam portion (S) and a heated portion of a welded steel pipe (W) according to any one of claims 1 to 4, the position detection device (2, 2A) being provided after any one of the one or the plurality of annealing heaters (13), wherein
   the position detection device (2, 2A) is configured to detect a position of the seam portion (S) and a position of the heated portion generated by the one or the plurality of annealing heaters (13).

6. A position detection method for a seam portion (S) and a heated portion of a welded steel pipe (W), the position detection method detecting a position of the seam portion (S) of the welded steel pipe (W) and a position of the heated portion generated by heating the seam portion (S) and/or near the seam portion (S), the position detection method comprising:

an irradiation step of emitting light by an irradiation unit (21, 21A, 21B); and

an imaging step of capturing, by an imaging device (22), a first image of the seam portion (S) and the heated portion irradiated with light and a second image of the seam portion (S) and the heated portion not irradiated with light, wherein

in the irradiation step and the imaging step, a control device (25) controls light irradiation by the irradiation unit (21, 21A, 21B),

the position detection method being **characterized in that**:

the control device (25) controls an imaging timing of the imaging device (22), and

the position detection method further comprises detecting, by an image processing device (23), the position of the seam portion (S) and the position of the heated portion by taking a difference between the first image and the second image, thereby acquiring a third image including only the reflected light component reflecting the light from the irradiation unit (21, 21A, 21B) by the seam portion (S) and the heated portion.

7. A position detection method for a seam portion (S) and a heated portion of a welded steel pipe (W), the position detection method detecting a position of the seam portion (S) of the welded steel pipe (W) and a position of the heated portion generated by heating the seam portion (S) and/or near the seam portion (S), the position detection method comprising:

an irradiation step of emitting light by an irradiation unit (21, 21A, 21B); and

an imaging step of capturing, by an imaging device (22), a first image of the seam portion (S) and the heated portion irradiated with light and a second image of the seam portion (S) and the heated portion not irradiated with light, wherein

in the irradiation step and the imaging step, a control device (25) controls light irradiation by the irradiation unit (21, 21A, 21B),

the position detection method being **characterized in that**:

the control device (25) controls an imaging timing of the imaging device (22), and

the control device controls a light irradiation timing of the irradiation unit and the imaging timing of the imaging device based on an allowable positional deviation amount between the first image and the second image.

8. A manufacturing method for a welded steel pipe (W), comprising:

a welding step of welding a butted portion of a steel plate formed into a tubular shape;

a cutting step of cutting a bead portion after welding; and

a heating step of heating, by an annealing heater (13), a seam portion (S) after cutting, wherein

the heating step includes a position detection step of detecting a position of the seam portion (S) and a position of the heated portion generated by the annealing heater (13), the position detection step employing the position detection method for a seam portion (S) and a heated portion of a welded steel pipe (13) according to claim 6 or 7.

9. The manufacturing method for a welded steel pipe (W) according to claim 8, wherein the heating step includes a heater position control step of controlling a position of the annealing heater (13) based on a deviation amount of the position of the heated portion with respect to the position of the seam portion (S) detected in the position detection step.

10. A quality control method for a welded steel pipe (W), the quality control method controlling a quality of the welded steel pipe (W) based on a deviation amount of a position of a heated portion with respect to a position of a seam portion (S), the deviation amount being detected by the position detection method for a seam portion (S) and a heated portion of a welded steel pipe (W) according to claim 6 or 7.

**Patentansprüche**

1. Vorrichtung zur Erfassung der Position (2, 2A) für einen Nahtteil (S) und einen erwärmten Teil eines geschweißten Stahlrohrs (W), wobei die Positionserfassungsvorrichtung (2, 2A) konfiguriert ist, um eine Position des Nahtteils (S) des geschweißten Stahlrohrs (W) und eine Position des erwärmten Teils, der durch Erwärmen des Nahtteils (S) und/oder in der Nähe des Nahtteils (S) erzeugt wird, zu erfassen, wobei die Positionserfassungsvorrichtung (2, 2A) umfasst:

eine Bestrahlungseinheit (21, 21A, 21B), die konfiguriert ist, um Licht zu emittieren;
eine Abbildungsvorrichtung (22), die konfiguriert ist, um ein erstes Bild des Nahtteils (S) und des erwärmten Teils, der mit Licht bestrahlt wird, und ein zweites Bild des Nahtteils (S) und des erwärmten Teils, der nicht mit Licht bestrahlt wird, zu erfassen; und
eine Steuervorrichtung (25), die konfiguriert ist, um die Lichtbestrahlung durch die Bestrahlungseinheit (21, 21A, 21B) zu steuern, wobei die Positionserfassungsvorrichtung (2, 2A) **dadurch gekennzeichnet ist, dass**:

die Steuervorrichtung (25) konfiguriert ist, um einen Abbildungszeitpunkt der Abbildungsvorrichtung (22) zu steuern, und
die Positionserfassungsvorrichtung (2, 2A) weiter eine Bildverarbeitungsvorrichtung (23) umfasst, die konfiguriert ist, um die Position des Nahtteils (S) und die Position des erwärmten Teils durch Bilden einer Differenz zwischen dem ersten Bild und dem zweiten Bild zu erfassen, wodurch ein drittes Bild aufgenommen wird, das nur die Reflexionslichtkomponente einschließt, die das Licht von der Bestrahlungseinheit (21, 21A, 21B) durch den Nahtteil (S) und den erwärmten Teil reflektiert.

2. Vorrichtung zur Erfassung der Position (2, 2A) für einen Nahtteil (S) und einen erwärmten Teil eines geschweißten Stahlrohrs (W) nach Anspruch 1, wobei die Steuervorrichtung (25) einen Lichtbestrahlungszeitpunkt der Bestrahlungseinheit (21, 21A, 21B) und den Abbildungszeitpunkt der Abbildungsvorrichtung (22) auf der Grundlage eines zulässigen Positionsabweichungsbetrags zwischen dem ersten Bild und dem zweiten Bild steuert.

3. Vorrichtung zur Erfassung der Position (2, 2A) für einen Nahtteil (S) und einen erwärmten Teil eines geschweißten Stahlrohrs (W), wobei die Positionserfassungsvorrichtung (2, 2A) konfiguriert ist, um eine Position des Nahtteils (S) des geschweißten Stahlrohrs (W) und eine Position des erwärmten Teils, der durch Erwärmen des Nahtteils (S) und/oder in der Nähe des Nahtteils (S) erzeugt wird, zu erfassen, wobei die Positionserfassungsvorrichtung (2, 2A) umfasst:

eine Bestrahlungseinheit (21, 21A, 21B), die konfiguriert ist, um Licht zu emittieren;
eine Abbildungsvorrichtung (22), die konfiguriert ist, um ein erstes Bild des Nahtteils (S) und des erwärmten Teils, der mit Licht bestrahlt wird, und ein zweites Bild des Nahtteils (S) und des erwärmten Teils, der nicht mit Licht bestrahlt wird, zu erfassen; und
eine Steuervorrichtung (25), die konfiguriert ist, um die Lichtbestrahlung durch die Bestrahlungseinheit (21, 21A, 21B) zu steuern, wobei die Positionserfassungsvorrichtung (2, 2A) **dadurch gekennzeichnet ist, dass**:

die Steuervorrichtung (25) konfiguriert ist, um einen Abbildungszeitpunkt der Abbildungsvorrichtung (22) zu steuern, und
die Steuervorrichtung einen Lichtbestrahlungszeitpunkt der Bestrahlungseinheit und den Abbildungszeitpunkt der Abbildungsvorrichtung auf der Grundlage eines zulässigen Positionsabweichungsbetrags zwischen dem ersten Bild und dem zweiten Bild steuert.

4. Vorrichtung zur Erfassung der Position (2, 2A) für einen Nahtteil (S) und einen erwärmten Teil eines geschweißten Stahlrohrs (W) nach einem der Ansprüche 1 bis 3, wobei die Bestrahlungseinheit (21, 21A, 21B) und die Abbildungsvorrichtung (22) an Positionen angeordnet sind, die eine regelmäßige Reflexionsbedingung in Bezug auf einen Messbereich einschließlich des Nahtteils (S) erfüllen.

5. Fertigungsanlage (1) für ein geschweißtes Stahlrohr (W), umfassend:

eine Schweißmaschine (11), die konfiguriert ist, um einen stumpfen Teil eines rohrförmig geformten Stahlblechs zu schweißen;
eine Schneidemaschine (12), die konfiguriert ist, um einen WulstTeil nach dem Schweißen zu schneiden;
einen oder eine Vielzahl von Glühofen (13), die konfiguriert sind, um einen Nahtteil (S) nach dem Schneiden zu erhitzen; und
eine Vorrichtung zur Erfassung der Position (2, 2A) für einen Nahtteil (S) und einen erwärmten Teil eines geschweißten Stahlrohrs (W) nach einem der Ansprüche 1 bis 4, wobei die Vorrichtung zur Erfassung der Position (2, 2A) hinter einem beliebigen des einen oder Vielzahl von Glühofen (13) bereitgestellt ist, wobei die Vorrichtung zur Erfassung der Position (2, 2A) konfiguriert ist, um eine Position des Nahtteils (S) und eine Position des erwärmten Teils zu erfassen, der durch den einen oder die Vielzahl von Glühofen (13) erzeugt wird, erfasst

6. Verfahren zur Erfassung der Position für einen Nahtteil (S) und einen erwärmten Teil eines geschweißten Stahlrohrs (W), wobei das Positionserfassungsverfahren eine Position des Nahtteils (S) des geschweißten Stahlrohrs (W) und eine Position des erwärmten Teils, der durch Erwärmen des Nahtteils (S) und/oder in der Nähe des Nahtteils (S) erzeugt wird, erfasst, wobei das Positionserfassungsverfahren umfasst:

   einen Bestrahlungsschritt des Emittierens von Licht durch eine Bestrahlungseinheit (21, 21A, 21B); und
   einen Abbildungsschritt des Erfassens, durch eine Abbildungsvorrichtung (22), eines ersten Bildes des Nahtteils (S) und des erwärmten Teils, der mit Licht bestrahlt wird, und eines zweiten Bildes des Nahtteils (S) und des erwärmten Teils, der nicht mit Licht bestrahlt wird, wobei
   im Bestrahlungsschritt und im Abbildungsschritt eine Steuervorrichtung (25) die Lichtbestrahlung durch die Bestrahlungseinheit (21, 21A, 21B) steuert,

wobei das Verfahren zur Erfassung der Position **dadurch gekennzeichnet ist, dass**:

   die Steuervorrichtung (25) einen Abbildungszeitpunkt der Abbildungsvorrichtung (22) steuert, und
   das Verfahren zur Erfassung der Position weiter die Erfassung der Position des Nahtteils (S) und der Position des erwärmten Teils durch eine Bildverarbeitungsvorrichtung (23) umfasst, indem eine Differenz zwischen dem ersten Bild und dem zweiten Bild gebildet wird, wodurch ein drittes Bild aufgenommen wird, das nur die Reflexionslichtkomponente einschließt, die das Licht von der Bestrahlungseinheit (21, 21A, 21B) durch den Nahtteil (S) und den erwärmten Teil reflektiert.

7. Verfahren zur Erfassung der Position für einen Nahtteil (S) und einen erwärmten Teil eines geschweißten Stahlrohrs (W), wobei das Positionserfassungsverfahren eine Position des Nahtteils (S) des geschweißten Stahlrohrs (W) und eine Position des erwärmten Teils, die durch Erwärmen des Nahtteils (S) und/oder in der Nähe des Nahtteils (S) erzeugt wird, erfasst, wobei das Positionserfassungsverfahren umfasst:

   einen Bestrahlungsschritt des Emittierens von Licht durch eine Bestrahlungseinheit (21, 21A, 21B); und
   einen Abbildungsschritt des Erfassens, durch eine Abbildungsvorrichtung (22), eines ersten Bildes des Nahtteils (S) und des erwärmten Teils, der mit Licht bestrahlt wird, und eines zweiten Bildes des Nahtteils (S) und des erwärmten Teils, der nicht mit Licht bestrahlt wird, wobei
   im Bestrahlungsschritt und im Abbildungsschritt eine Steuervorrichtung (25) die Lichtbestrahlung durch die Bestrahlungseinheit (21, 21A, 21B) steuert,

wobei das Positionsbestimmungsverfahren **dadurch gekennzeichnet ist, dass**:

   die Steuervorrichtung (25) einen Abbildungszeitpunkt der Abbildungsvorrichtung (22) steuert, und
   die Steuervorrichtung einen Lichtbestrahlungszeitpunkt der Bestrahlungseinheit und den Abbildungszeitpunkt der Abbildungsvorrichtung auf der Grundlage eines zulässigen Positionsabweichungsbetrags zwischen dem ersten Bild und dem zweiten Bild steuert.

8. Verfahren zur Herstellung für ein geschweißtes Stahlrohr (W), umfassend:

   einen Schweißschritt des Verschweißens eines stumpfen Teils eines rohrförmig geformten Stahlblechs;
   einen Schneideschritt des Schneidens eines Wulsteils nach dem Schweißen; und
   einen Heizschritt des Erwärmens eines Nahtteils (S) durch einen Glühofen (13) nach dem Schneiden, wobei der Heizschritt einen Positionserfassungsschritt des Erfassens einer Position des Nahtteils (S) und einer Position des erwärmten Teils, der durch den Glühofen (13) erzeugt wird, einschließt, wobei der Positionserfassungsschritt das Positionserfassungsverfahren für einen Nahtteil (S) und einen erwärmten Teil eines geschweißten Stahlrohrs (13) nach Anspruch 6 oder 7 verwendet.

9. Verfahren zur Hestellung für ein geschweißtes Stahlrohr (W) nach Anspruch 8, wobei der Heizschritt einen Heizungspositionssteuerungsschritt zum Steuern einer Position des Glühofens (13) auf der Grundlage eines Abweichungsbetrags der Position des erwärmten Teils in Bezug auf die Position des Nahtteils (S) einschließt, der in dem Positionserfassungsschritt erfasst wird.

**10.** Verfahren zur Steuerung der Qualität für ein geschweißtes Stahlrohr (W), wobei das Qualitätssteuerungsverfahren eine Qualität des geschweißten Stahlrohrs (W) auf der Grundlage eines Abweichungsbetrags einer Position eines erwärmten Teils in Bezug auf eine Position eines Nahtteils (S) steuert, wobei der Abweichungsbetrag durch das Positionserfassungsverfahren für einen Nahtteil (S) und einen erwärmten Teil eines geschweißten Stahlrohrs (W) nach Anspruch 6 oder 7 erfasst wird.

**Revendications**

1. Dispositif de détection de position (2, 2A) pour une partie soudée (S) et une partie chauffée d'un tuyau en acier soudé (W), le dispositif de détection de position (2, 2A) étant configuré pour détecter une position de la partie soudée (S) du tuyau en acier soudé (W) et une position de la partie chauffée générée par chauffage de la partie soudée (S) et/ou à proximité de la partie soudée (S), le dispositif de détection de position (2, 2A) comprenant :

   une unité d'irradiation (21, 21A, 21B) configurée pour émettre de la lumière ;
   un dispositif d'imagerie (22) configuré pour capturer une première image de la partie soudée (S) et de la partie chauffée irradiées avec de la lumière et une deuxième image de la partie soudée (S) et de la partie chauffée non irradiées avec de la lumière ; et
   un dispositif de commande (25) configuré pour commander une irradiation de lumière par l'unité d'irradiation (21, 21A, 21B), le dispositif de détection de position (2, 2A) étant **caractérisé en ce que** :

   le dispositif de commande (25) est configuré pour commander une temporisation d'imagerie du dispositif d'imagerie (22), et
   le dispositif de détection de position (2, 2A) comprend en outre un dispositif de traitement d'image (23) configuré pour détecter la position de la partie soudée (S) et la position de la partie chauffée en faisant une différence entre la première image et la deuxième image, acquérant ainsi une troisième image incluant uniquement la composante de lumière réfléchie réfléchissant la lumière provenant de l'unité d'irradiation (21, 21A, 21B) par la partie soudée (S) et la partie chauffée.

2. Dispositif de détection de position (2, 2A) pour une partie soudée (S) et une partie chauffée d'un tuyau en acier soudé (W) selon la revendication 1, dans lequel le dispositif de commande (25) commande une temporisation d'irradiation de lumière de l'unité d'irradiation (21, 21A, 21B) et la temporisation d'imagerie du dispositif d'imagerie (22) sur la base d'une quantité d'écart de position admissible entre la première image et la deuxième image.

3. Dispositif de détection de position (2, 2A) pour une partie soudée (S) et une partie chauffée d'un tuyau en acier soudé (W), le dispositif de détection de position (2, 2A) étant configuré pour détecter une position de la partie soudée (S) du tuyau en acier soudé (W) et une position de la partie chauffée générée par chauffage de la partie soudée (S) et/ou à proximité de la partie soudée (S), le dispositif de détection de position (2, 2A) comprenant :

   une unité d'irradiation (21, 21A, 21B) configurée pour émettre de la lumière ;
   un dispositif d'imagerie (22) configuré pour capturer une première image de la partie soudée (S) et de la partie chauffée irradiées avec de la lumière et une deuxième image de la partie soudée (S) et de la partie chauffée non irradiées avec de la lumière ; et
   un dispositif de commande (25) configuré pour commander une irradiation de lumière par l'unité d'irradiation (21, 21A, 21B), le dispositif de détection de position (2, 2A) étant **caractérisé en ce que** :

   le dispositif de commande (25) est configuré pour commander une temporisation d'imagerie du dispositif d'imagerie (22), et
   le dispositif de commande commande une temporisation d'irradiation de lumière de l'unité d'irradiation et la temporisation d'imagerie du dispositif d'imagerie sur la base d'une quantité d'écart de position admissible entre la première image et la deuxième image.

4. Dispositif de détection de position (2, 2A) pour une partie soudée (S) et une partie chauffée d'un tuyau en acier soudé (W) selon l'une quelconque des revendications 1 à 3, dans lequel l'unité d'irradiation (21, 21A, 21B) et le dispositif d'imagerie (22) sont agencés en des positions qui satisfont à une condition de réflexion régulière par rapport à une zone de mesure incluant la partie soudée (S).

5. Installation de fabrication (1) pour un tuyau en acier soudé (W), comprenant :

une machine de soudage (11) configurée pour souder une partie en butée d'une plaque en acier formée en une forme tubulaire ;

une machine de coupe (12) configurée pour couper une partie de cordon après soudage ;

un ou une pluralité de réchauffeurs de recuit (13) configurés pour chauffer une partie soudée (S) après coupe ; et

un dispositif de détection de position (2, 2A) pour une partie soudée (S) et une partie chauffée d'un tuyau en acier soudé (W) selon l'une quelconque des revendications 1 à 4, le dispositif de détection de position (2, 2A) étant prévu après l'un quelconque du un ou de la pluralité de réchauffeurs de recuit (13), dans laquelle

le dispositif de détection de position (2, 2A) est configuré pour détecter une position de la partie soudée (S) et une position de la partie chauffée générée par l'un ou la pluralité de réchauffeurs de recuit (13).

6. Procédé de détection de position pour une partie soudée (S) et une partie chauffée d'un tuyau en acier soudé (W), le procédé de détection de position détectant une position de la partie soudée (S) du tuyau en acier soudé (W) et une position de la partie chauffée générée par chauffage de la partie soudée (S) et/ou à proximité de la partie soudée (S), le procédé de détection de position comprenant :

une étape d'irradiation pour émettre de la lumière par une unité d'irradiation (21, 21A, 21B) ; et

une étape d'imagerie pour capturer, par un dispositif d'imagerie (22), une première image de la partie soudée (S) et de la partie chauffée irradiées avec de la lumière et une deuxième image de la partie soudée (S) et de la partie chauffée non irradiées avec de la lumière, dans lequel

dans l'étape d'irradiation et l'étape d'imagerie, un dispositif de commande (25) commande une irradiation de lumière par l'unité d'irradiation (21, 21A, 21B),

le procédé de détection de position étant **caractérisé en ce que** :

le dispositif de commande (25) commande une temporisation d'imagerie du dispositif d'imagerie (22), et

le procédé de détection de position comprend en outre la détection, par un dispositif de traitement d'image (23), de la position de la partie soudée (S) et la position de la partie chauffée en faisant une différence entre la première image et la deuxième image, acquérant ainsi une troisième image incluant uniquement la composante de lumière réfléchie réfléchissant la lumière provenant de l'unité d'irradiation (21, 21A, 21B) par la partie soudée (S) et la partie chauffée.

7. Procédé de détection de position pour une partie soudée (S) et une partie chauffée d'un tuyau en acier soudé (W), le procédé de détection de position détectant une position de la partie soudée (S) du tuyau en acier soudé (W) et une position de la partie chauffée générée par chauffage de la partie soudée (S) et/ou à proximité de la partie soudée (S), le procédé de détection de position comprenant :

une étape d'irradiation pour émettre de la lumière par une unité d'irradiation (21, 21A, 21B) ; et

une étape d'imagerie pour capturer, par un dispositif d'imagerie (22), une première image de la partie soudée (S) et de la partie chauffée irradiées avec de la lumière et une deuxième image de la partie soudée (S) et de la partie chauffée non irradiées avec de la lumière, dans lequel

dans l'étape d'irradiation et l'étape d'imagerie, un dispositif de commande (25) commande une irradiation de lumière par l'unité d'irradiation (21, 21A, 21B),

le procédé de détection de position étant **caractérisé en ce que** :

le dispositif de commande (25) commande une temporisation d'imagerie du dispositif d'imagerie (22), et

le dispositif de commande commande une temporisation d'irradiation de lumière de l'unité d'irradiation et la temporisation d'imagerie du dispositif d'imagerie sur la base d'une quantité d'écart de position admissible entre la première image et la deuxième image.

8. Procédé de fabrication d'un tuyau en acier soudé (W), comprenant :

une étape de soudage pour souder une partie en butée d'une plaque en acier formée en une forme tubulaire ;

une étape de coupe pour couper une partie de cordon après soudage ; et

une étape de chauffage pour chauffer, par un réchauffeur de recuit (13), une partie soudée (S) après coupe, dans lequel

l'étape de chauffage inclut une étape de détection de position pour détecter une position de la partie soudée (S) et une position de la partie chauffée générée par le réchauffeur de recuit (13), l'étape de détection de position employant le procédé de détection de position pour une partie soudée (S) et une partie chauffée d'un tuyau en acier soudé (13) selon la revendication 6 ou 7.

9. Procédé de fabrication d'un tuyau en acier soudé (W) selon la revendication 8, dans lequel l'étape de chauffage inclut une étape de commande de position de réchauffeur pour commander une position du réchauffeur de recuit (13) sur la base d'une quantité d'écart de la position de la partie chauffée par rapport à la position de la partie soudée (S) détectée dans l'étape de détection de position.

10. Procédé de contrôle de qualité pour un tuyau en acier soudé (W), le procédé de contrôle de qualité contrôlant une qualité du tuyau en acier soudé (W) sur la base d'une quantité d'écart d'une position d'une partie chauffée par rapport à une position d'une partie soudée (S), la quantité d'écart étant détectée par le procédé de détection de position pour une partie soudée (S) et une partie chauffée d'un tuyau en acier soudé (W) selon la revendication 6 ou 7.

# FIG.1

# FIG.2

# FIG.3

ACQUISITION
OF FIRST
IMAGE

ACQUISITION
OF SECOND
IMAGE

EXPOSURE

T1   d   T2

LIGHT
IRRADIATION

# FIG.4

# FIG.5

ACQUISITION OF FIRST IMAGE

ACQUISITION OF SECOND IMAGE

ACQUISITION OF THIRD IMAGE

EXPOSURE

T1  d1  T2  d2  T3

LIGHT IRRADIATION

a1  d'1  a2

# FIG.6

# FIG.7

(a)            (b)            (c)            (d)

BEFORE HEATING   S      AFTER HEATING   S      BEFORE HEATING   S      AFTER HEATING

REGULAR REFLECTION          DIFFUSE REFLECTION

EP 4 321 835 B1

# FIG.8

(a)

SEAM PORTION

REGULAR REFLECTION LUMINANCE

OTHER THAN SEAM PORTION

OXIDE FILM ADHESION AMOUNT ON SEAM PORTION

(b)

OTHER THAN SEAM PORTION

DIFFUSE REFLECTION LUMINANCE

SEAM PORTION

OXIDE FILM ADHESION AMOUNT ON SEAM PORTION

# FIG.9

START

S1
DIFFERENCE IN REGULAR REFLECTION LUMINANCE BETWEEN SEAM PORTION AND PORTION OTHER THAN SEAM PORTION?

NO

YES

S2
CALCULATE SEAM POSITION USING REGULAR REFLECTION IMAGE

S3
CALCULATE SEAM POSITION USING DIFFUSE REFLECTION IMAGE

END

# FIG.10

HEATING POSITION CENTER OF ANNEALING HEATER

RADIATION IMAGE LUMINANCE VALUE

CIRCUMFERENTIAL POSITION ON IMAGE

# FIG.11

CONVEYANCE
DIRECTION

24

RADIATION IMAGE                    REFLECTION IMAGE

POSITION OF
HEATED PORTION

POSITION OF
SEAM PORTION

# FIG.12

24

REFLECTION IMAGE

POSITION OF
HEATED PORTION

POSITION OF
SEAM PORTION

# FIG.13

# FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5633542 A
- JP H5240844 A
- JP H10170228 A
- JP S5225687 A
- JP S59108903 A
- JP S6242004 A
- JP H0296602 B